# EUROPEAN PATENT SPECIFICATION

(11) **EP 0 594 973 B1**
(45) Date of publication and mention of the grant of the patent: **22.03.2000**
(21) Application number: 93113761.6
(22) Date of filing: 27.08.1993
(51) Int. Cl.: G03C 1/005, G03C 1/83, C09B 67/00

(54) **Silver halide photographic material**
Photographisches Silberhalogenidmaterial
Matériau photographique à l'halogénure d'argent

(30) Priority: 12.10.1992 JP 27294292
(43) Date of publication of application: 04.05.1994
(73) Proprietor: FUJI PHOTO FILM CO., LTD., Kanagawa-ken (JP)
(72) Inventor: Ohya, Kazuko, c/o Fuji Photo Film Co., Ltd., Kanagawa (JP)
(74) Representative: Grünecker, Kinkeldey, Stockmair & Schwanhäusser Anwaltssozietät

(56) References cited:
- EP-A- 0 299 435
- EP-A- 0 450 551
- EP-A- 0 554 834
- US-A- 5 035 986

## Description

This invention relates to a process for preparing a photographic dye. It also relates to the use of the dye in a silver halide photographic material.

WO 88/04794, JP-A-55-155350 (the term "JP-A" as used herein means an "unexamined published Japanese Patent Application") and JP-A-55-155351 disclose that the photographic emulsion layers and other hydrophilic colloid layers of silver halide photographic materials are dyed by using the dispersions of the fine solid particles of dyes to absorb light in a specific wavelength region.

These conventional dyes synthesized in protonic solvents or aprotic non-polar solvents or these conventional dispersions of the dyes obtained by drying the dye after the synthesis thereof and then dispersing them are effective in dyeing only the specific layers of the silver halide photographic materials, but they have disadvantages in that they have poor dispersibility and are inferior in long-term stability and hence, photographic performances are deteriorated and discoloration or fading occurs during keeping. EP-A-450551 discloses solid particle dispersions of specific dyes.

It is the object of the present invention to provide a process for preparing an excellent dispersion of fine solid particles of dye.

This object of the present invention has been achieved by providing a process for preparing a dispersion of fine solid particles of a dye represented by the following general formula (I), wherein the dye is synthesized in the presence of at least one aprotic polar solvent as a solvent to be used in the synthesis of the dye

D-(X)_{y} (I)

wherein D represents a residue of a compound having a chromophoric group; X represents a dissociable proton or a group having a dissociable proton bonded to D directly or through a bivalent bonding group; and y represents an integer of 1 to 7; characterized in that the resulting dye is dispersed without passing through any drying stage; with the proviso that said dye is not an oxonol dye.

In a preferred embodiment, the present invention provides a process for preparing a dispersion of fine solid particles of a dye represented by the following general formula (II), 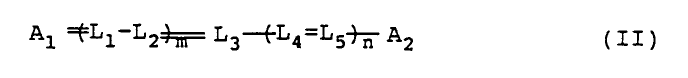 wherein A₁ represents an acid nucleus required for forming a dye; A₂ represents an acid nucleus required for forming a dye, or an aromatic ring or a heterocyclic ring; L₁, L₂, L₃, L₄ and L₅ each represents a methine group; and m and n each represents 0 or 1; with the proviso that A₂ is not an acid nucleus required for forming an oxonol dye.

The dyes of general formula (I) will be illustrated in greater detail below.

The residue of compound having a chromophoric group represented by D can be chosen from among residues of conventional many compounds. Examples of the compounds include merocyanine dyes, cyanine dyes, arylidene dyes, azomethine dyes, triphenylmethane dyes, azo dyes and anthraquinone dyes. Specific examples thereof include compounds described in JP-A-3-259136 (the 14th line of left lower column of page 5 to the bottom of left lower column of page 13).

It is preferred that the dissociable proton or the group having a dissociable proton is in the undissociated state during dispersing. Examples of the group include a carboxyl group, a sulfonamido group, a sulfamoyl group, a sulfonylcarbamoyl group, a carbonylsulfamoyl group and the enol group of the oxonol dye.

The dyes of general formula (II) will be illustrated in greater detail below.

The acid nucleus represented by A₁ is preferably a methylene group or a cyclic ketomethylene group sandwiched between electron attractive groups. Specific examples of A₁ include the following groups. In the specific examples of A₁ shown below, only groups in a keto form or the analogs thereof are shown. 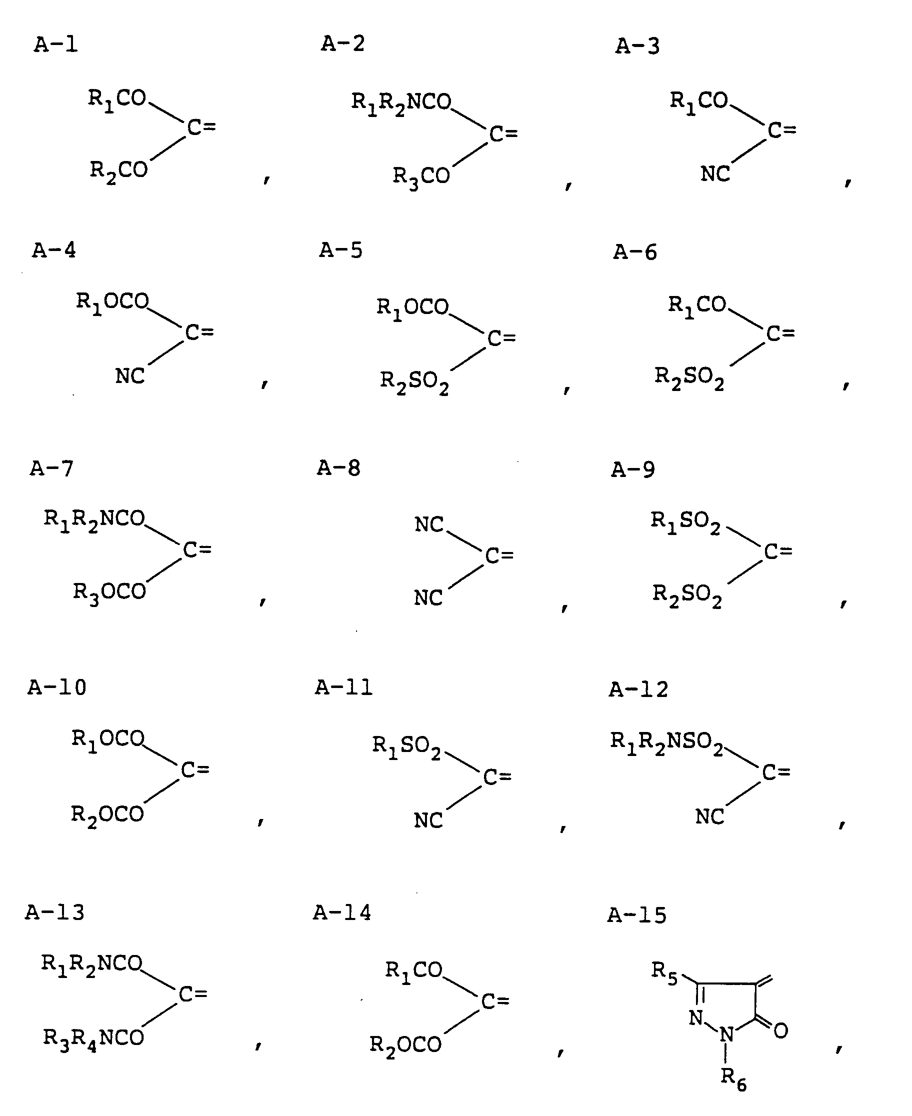 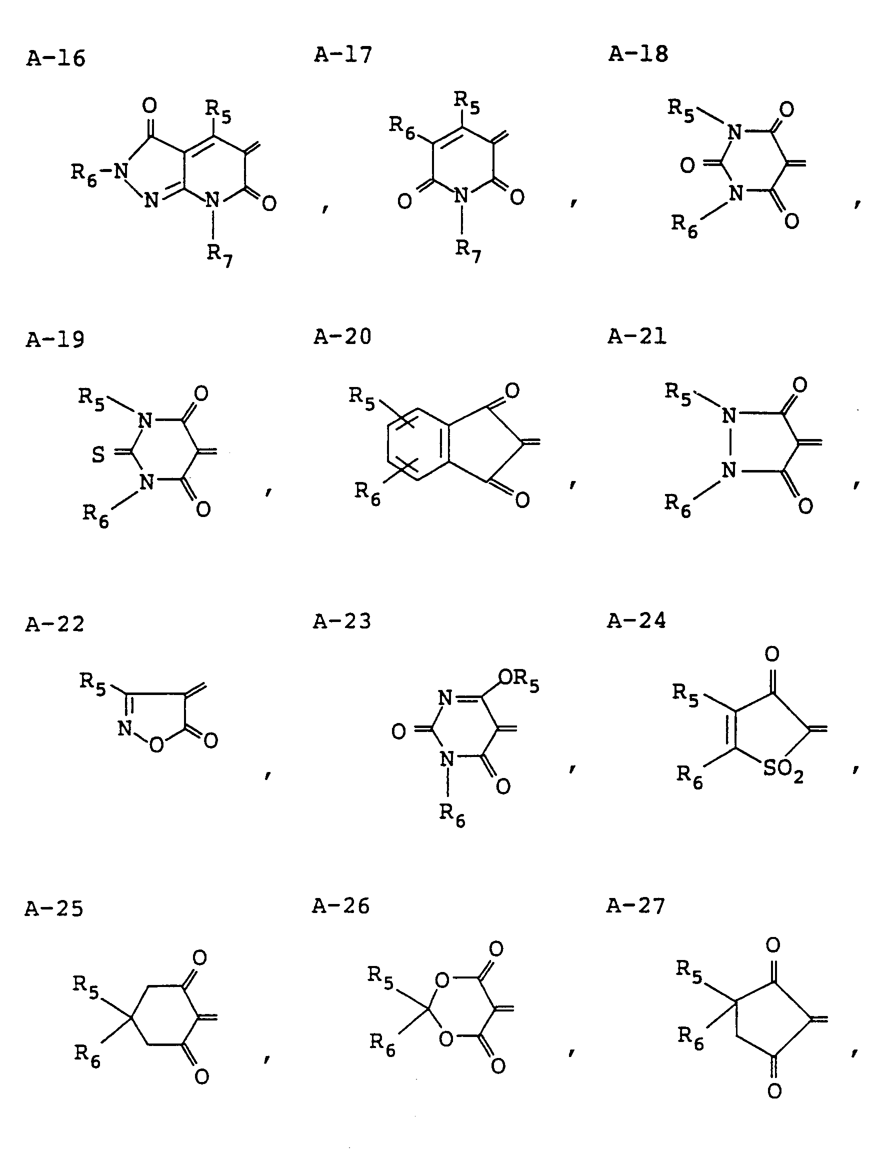 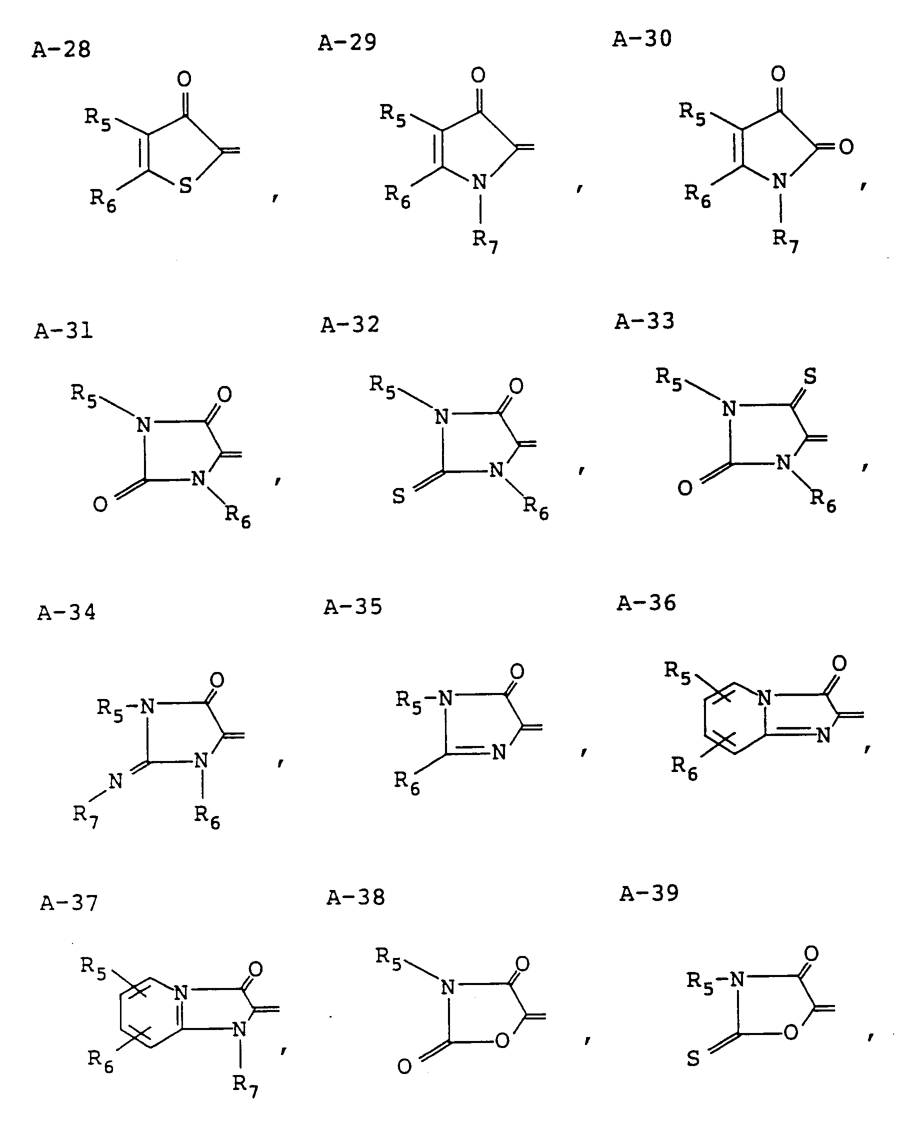 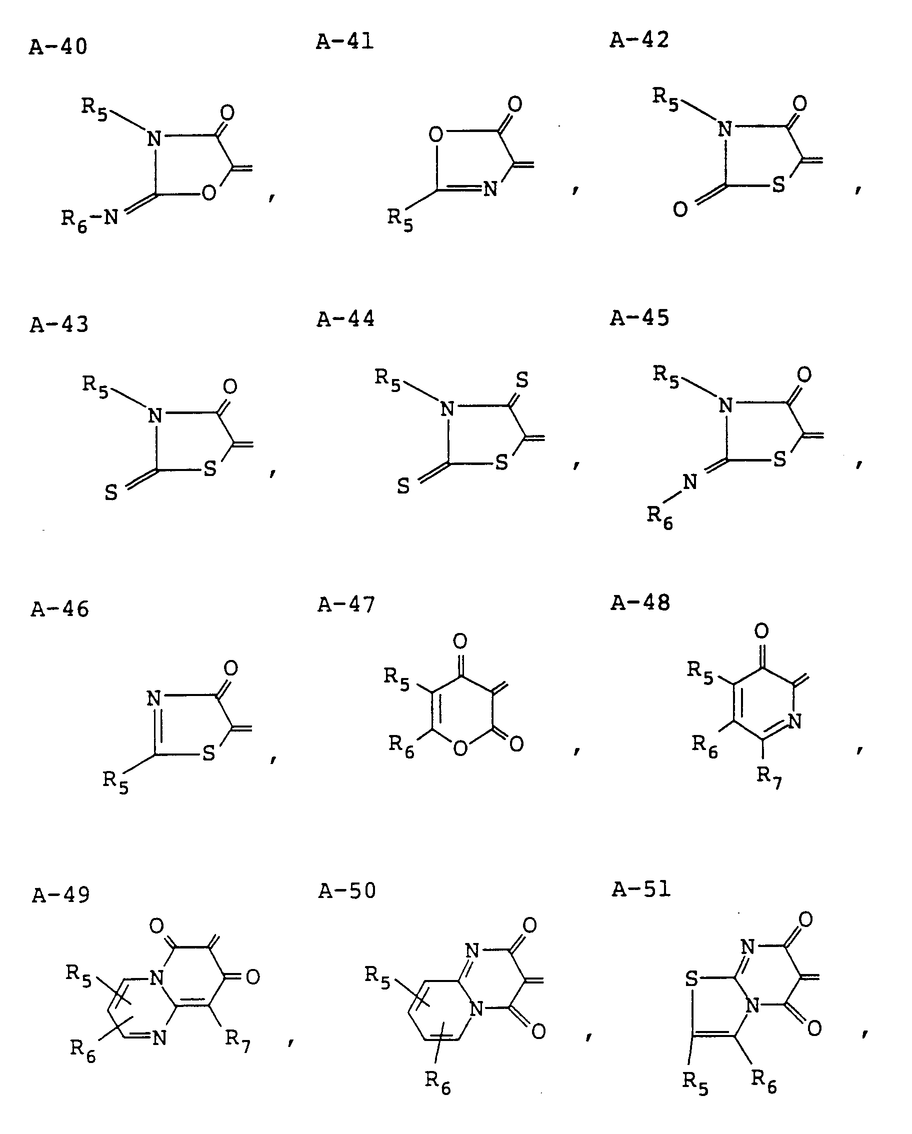 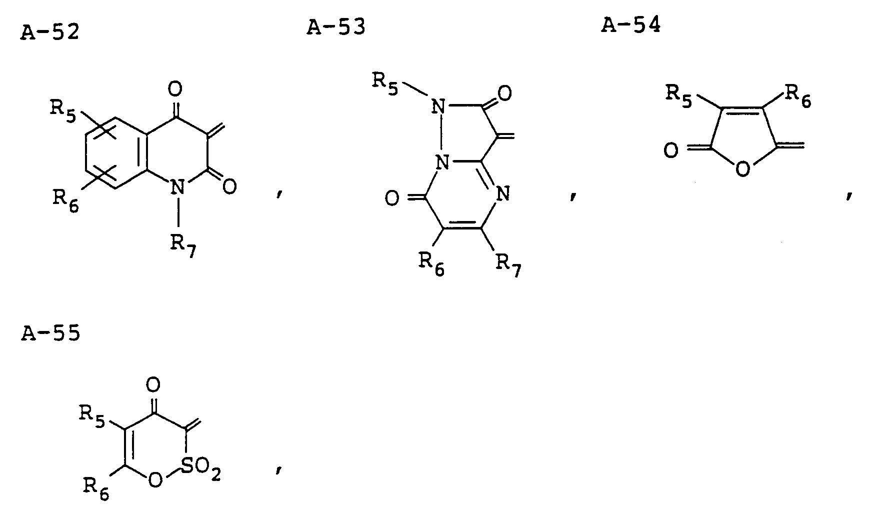 wherein R₁, R₂, R₃ and R₄ each represents a hydrogen atom, an alkyl group, an aryl group, a heterocyclic group, an alkenyl group or hydroxyl group; and R₅, R₆ and R₇ each represents a hydrogen atom or a substituent group; or R₁ and R₂, R₃ and R₄ or R₅ and R₆ may be combined together to form a five-membered or six-membered ring.

The substituent group represented by R₅, R₆ and R₇ may be any group, so long as the dyes of general formula (II) is substantially not dissolved in water having a pH of 5 to 7. Examples of the substituent group include a carboxyl group, a sulfonamido group having 1 to 10 carbon atoms, preferably 1 to 6 carbon atoms (e.g., methanesulfonamido, benzenesulfonamido, butanesulfonamido), a sulfonylcarbamoyl group having 2 to 10 carbon atoms, preferably 2 to 7 carbon atoms (e.g., methanesulfonylcarbamoyl, propanesulfonylcarbamoyl), a carbonylsulfamoyl group having 2 to 10 carbon atoms, preferably 2 to 7 carbon atoms (e.g., acetylsulfamoyl, propionylsulfamoyl), an alkyl group having 1 to 10 carbon atoms, preferably 1 to 6 carbon atoms (e.g., methyl, ethyl, isopropyl, butyl, hexyl, 2-hydroxyethyl, 4-carboxybutyl), an alkoxy group having 1 to 10 carbon atoms, preferably 1 to 6 carbon atoms (e.g., methoxy, ethoxy, butoxy), a halogen atom (e.g., chlorine, bromine, fluorine), an amino group having 0 to 10 carbon atoms, preferably 0 to 6 carbon atoms (e.g., dimethylamino, diethylamino, carboxyethylamino), an ester group having 2 to 12 carbon atoms, preferably 2 to 7 carbon atoms (e.g., methoxycarbonyl), an amido group having 1 to 10 carbon atoms, preferably 1 to 6 carbon atoms (e.g., acetylamino, benzamido), a carbamoyl group having 1 to 10 carbon atoms, preferably 1 to 6 carbon atoms (e.g., methylcarbamoyl, ethylcarbamoyl), a sulfamoyl group having 0 to 10 carbon atoms, preferably 0 to 6 carbon atoms (e.g., methylsulfamoyl, butylsulfamoyl, phenylsulfamoyl), an aryl group having 6 to 15 carbon atoms, preferably 6 to 10 carbon atoms (e.g., phenyl, naphthyl, 4-carboxyphenyl, 3-carboxyphenyl, 3,5-dicarboxyphenyl, 4-methanesulfonamidophenyl, 4-butanesulfonamidophenyl), an acyl group having 2 to 10 carbon atoms, preferably 2 to 7 carbon atoms (e.g., acetyl, benzoyl, propanoyl), a sulfonyl group having 1 to 10 carbon atoms, preferably 1 to 7 carbon atoms (e.g., methylsulfonyl, phenylsulfonyl), a ureido group having 1 to 10 carbon atoms, preferably 1 to 6 carbon atoms (e.g., ureido, methylureido), a urethane group having 2 to 12 carbon atoms, preferably 2 to 7 carbon atoms (e.g., methoxycarbonylamino, ethoxycarbonylamino), a cyano group, a hydroxyl group, a nitro group and a heterocyclic group (e.g., 5-carboxybenzoxazole ring, pyridine ring, sulfolane ring, furan ring).

The alkyl group represented by R₁, R₂, R₃ and R₄ is preferably an alkyl group having 1 to 10 carbon atoms (e.g., methyl, ethyl, benzyl, phenethyl, propyl, butyl, isobutyl, pentyl, hexyl, octyl, nonyl) which may optionally have one or more substituent groups (examples of the substituent groups include those already described above in the definition of the substituent group).

The aryl group represented by R₁, R₂, R₃ and R₄ is preferably an aryl group having 6 to 10 carbon atoms (e.g., phenyl, naphthyl) which may optionally have one or more substituent groups (examples of the substituent groups include those already described above in the definition of the substituent group).

The heterocyclic group represented by R₁, R₂, R₃ and R₄ is preferably a five-membered or six-membered heterocyclic ring (e.g., an oxazole ring, a benzoxazole ring, a thiazole ring, an imidazole ring, a pyridine ring, a furan ring, a thiophene ring, a sulfolane ring, a pyrazole ring, a pyrrole ring, a chroman ring, a coumarin ring) which may optionally have one or more substituent groups (examples of the substituent groups include those already described above in the definition of the substituent group).

The alkenyl group represented by R₁, R₂, R₃ and R₄ is preferably an alkenyl group having 2 to 10 carbon atoms (e.g., vinyl, allyl, 1-propenyl, 2-pentenyl, 1,3-butadienyl).

Examples of the five-membered or six-membered ring formed by combining R₁ and R₂, R₃ and R₄ or R₅ and R₆ together include a pyrrolidine ring, a piperidine ring, a morpholine ring and a benzene ring.

In general formula (II), A₂ represents an acid nucleus, an aromatic ring or a heterocyclic ring. Examples of the acid nucleus include the methylene group and the cyclic ketomethylene group represented by A₁. Examples of the aromatic ring include a benzene ring and a naphthalene ring. The heterocyclic ring represented by A₂ is preferably a five-membered or six-membered ring which may optionally have one or more substituent groups (examples of the substituent groups include those already described above in the definition of the substituent group). Two or more substituent groups may be combined together to form a fused ring. Examples of the heterocyclic ring include those already described above in the definition of the heterocyclic ring represented by R₁.

Specific examples of the heterocyclic ring include the following groups. 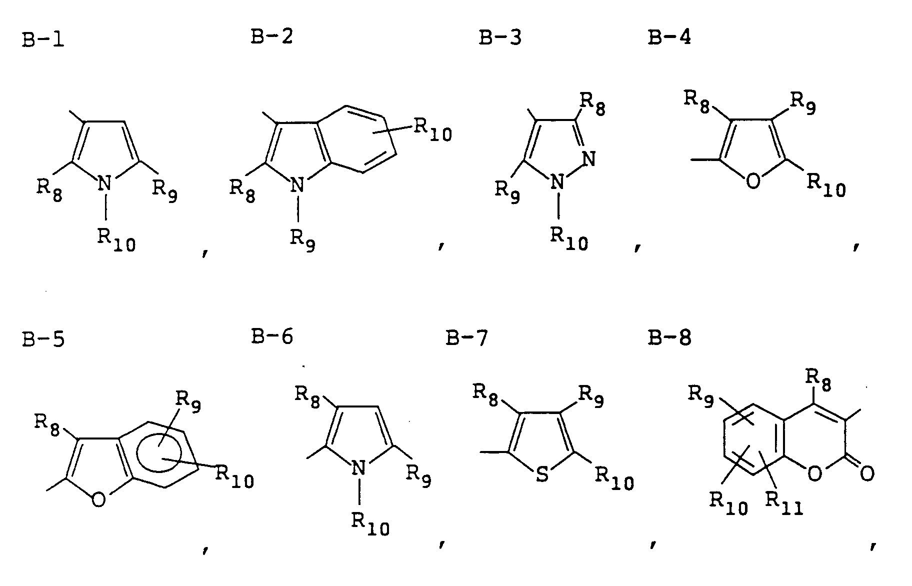 wherein R₈, R₉, R₁₀ and R₁₁ each represents a hydrogen atom or a substituent group (each has the same meaning as R₅).

The methine group represented by L₁, L₂, L₃, L₄ and L₅ may be substituted, for example, by methyl or ethyl. Substituent groups may be combined together to form a five-membered or six-membered ring (e.g., a cyclopentene ring, a cyclohexene ring, an isophorone ring).

Specific examples of the dyes of general formula (II) include, but are not limited to, the following compounds.

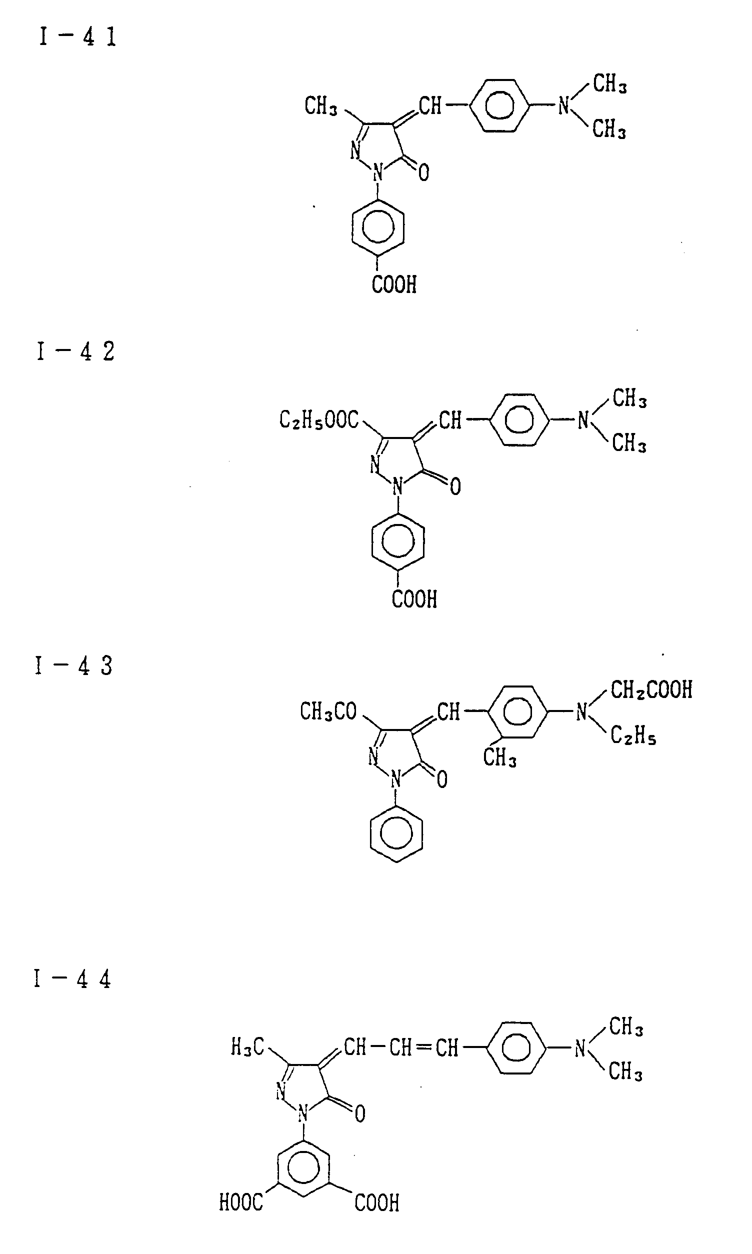

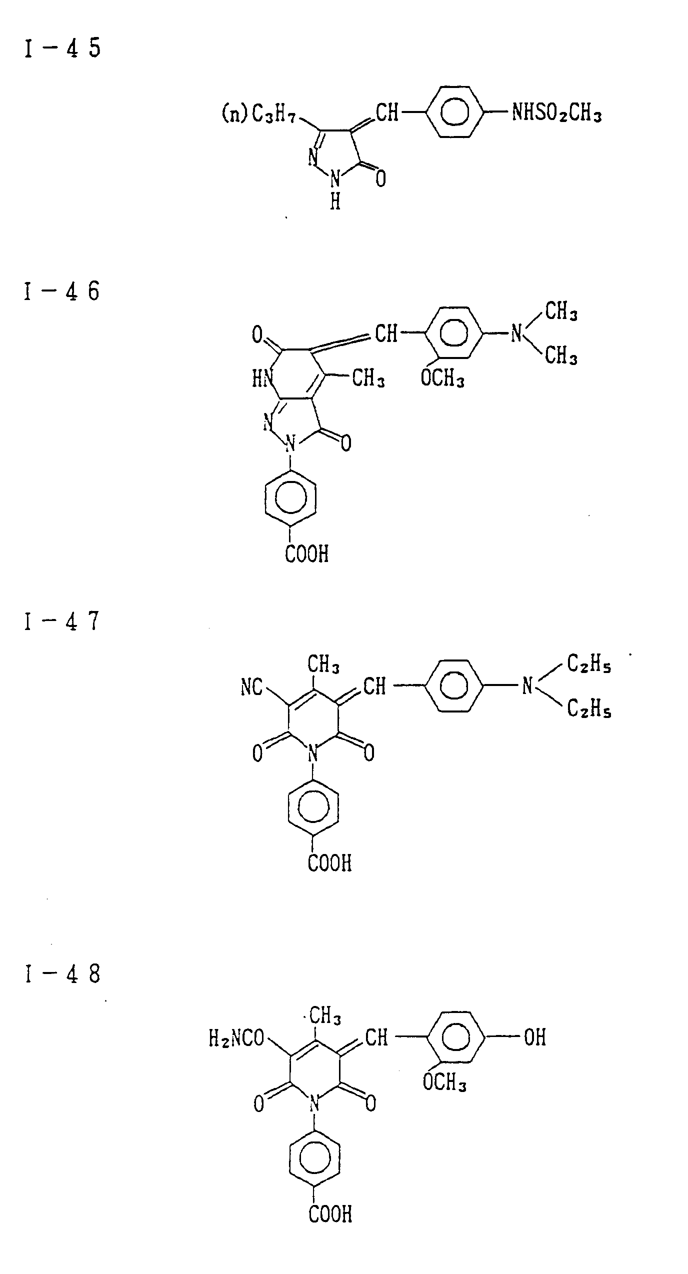

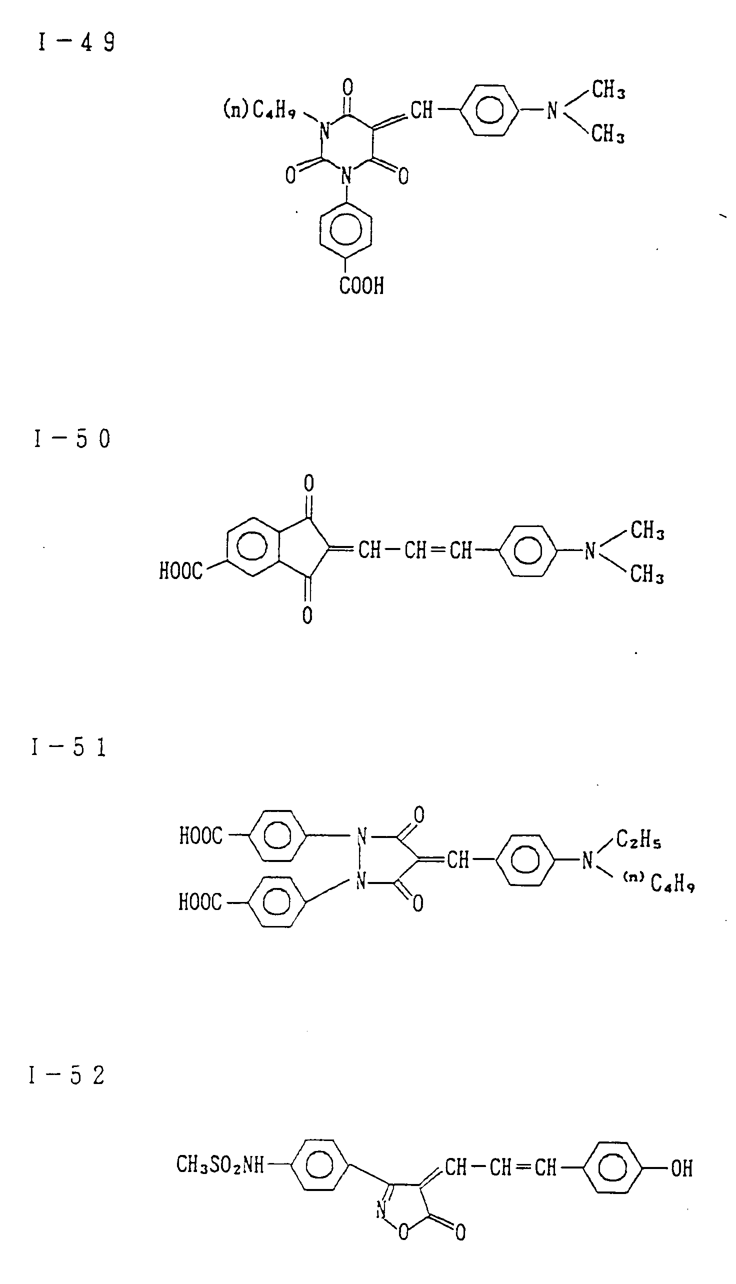

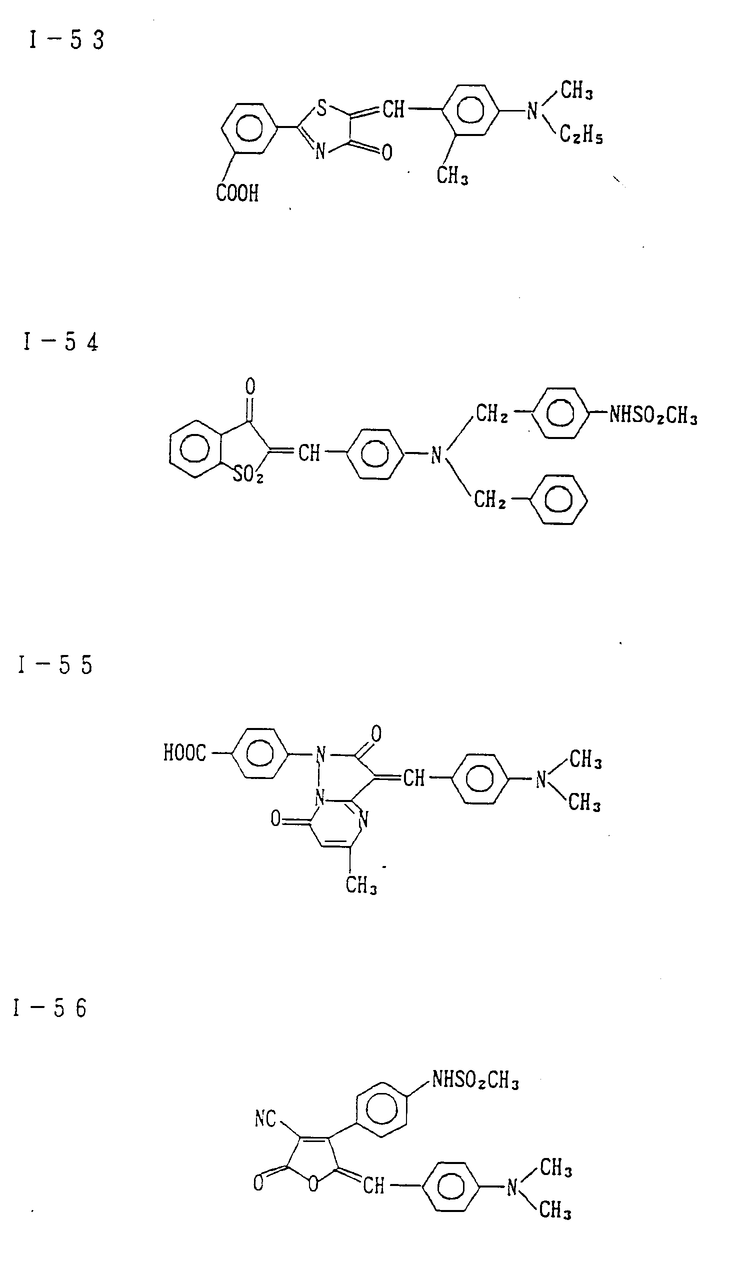

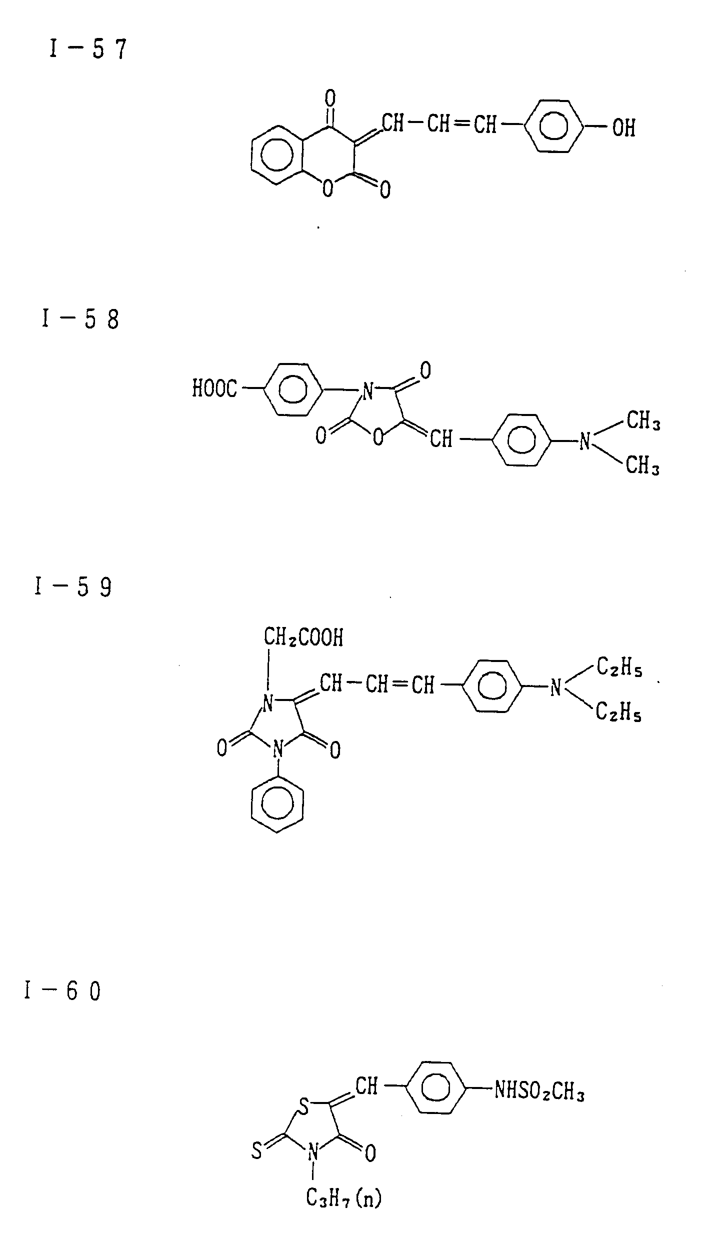

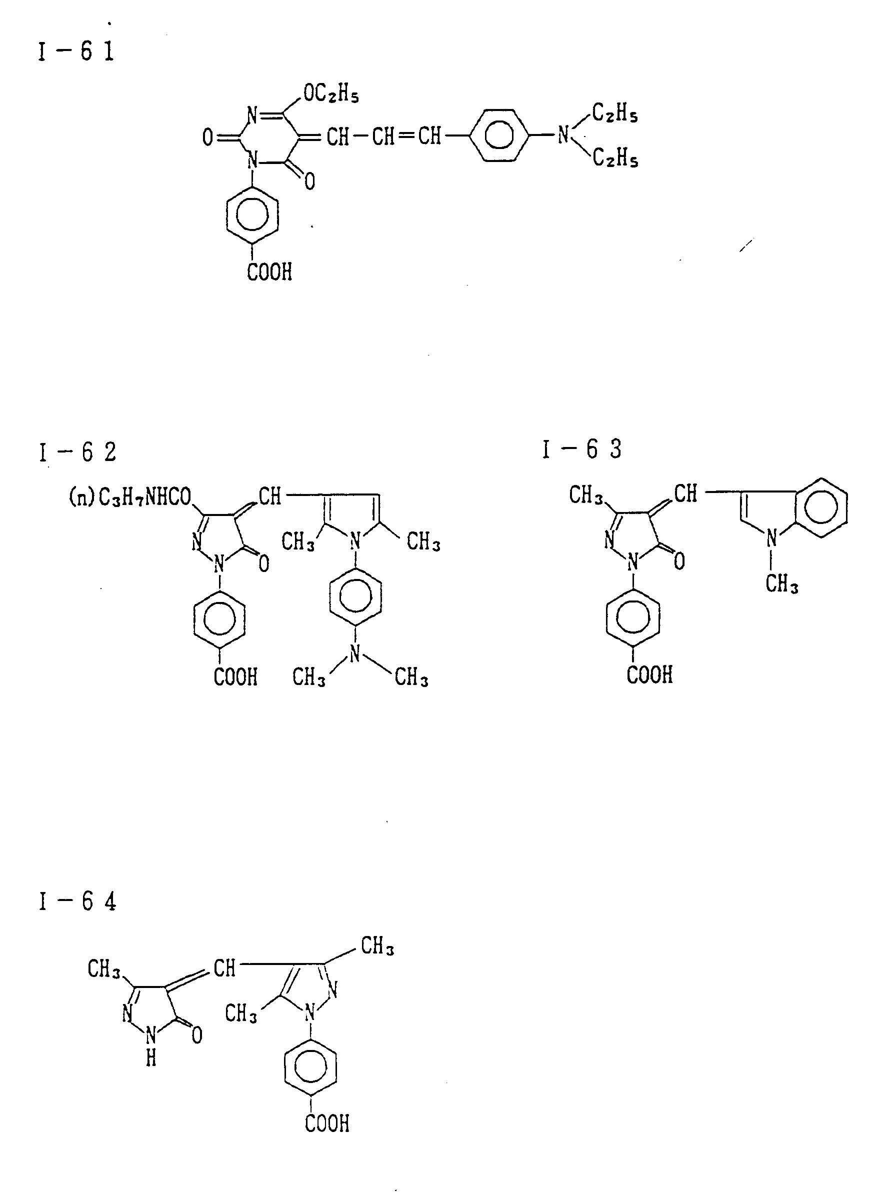

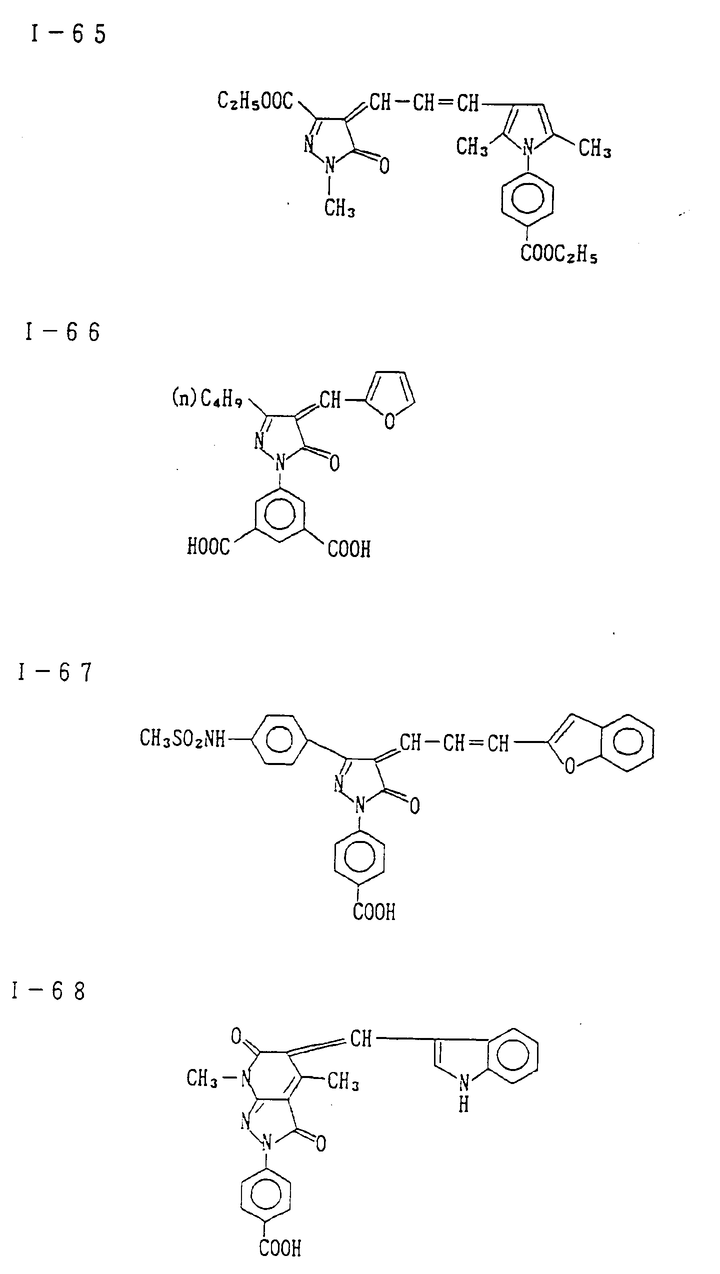

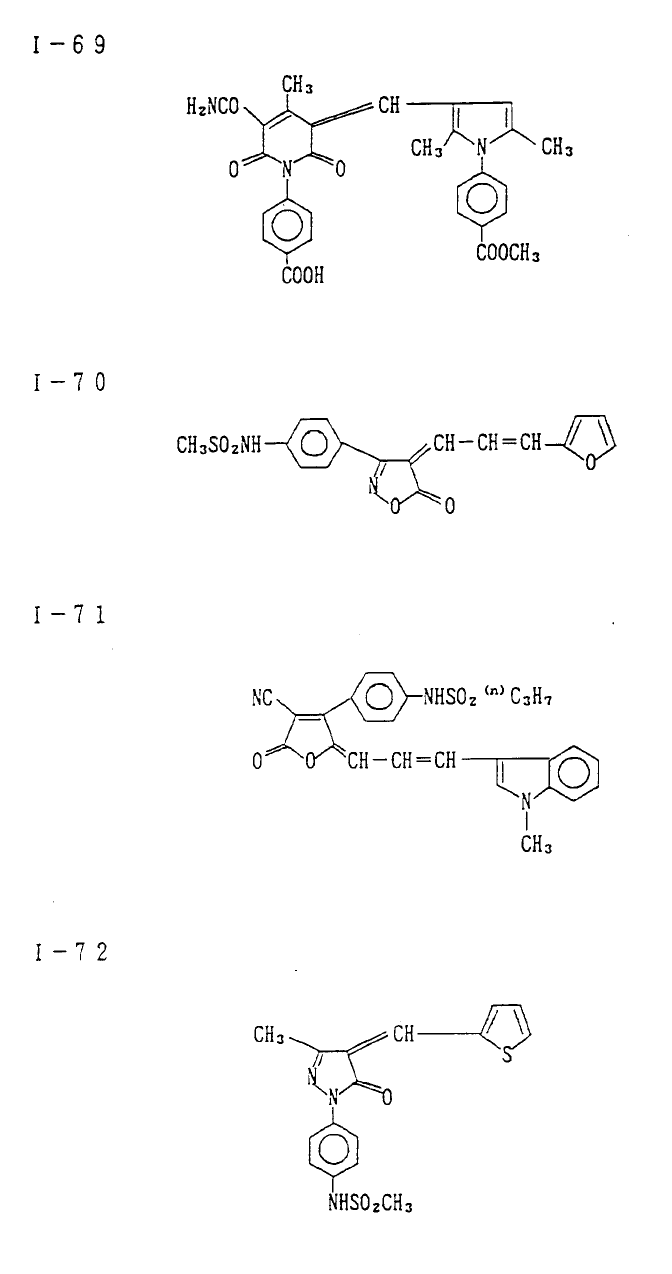

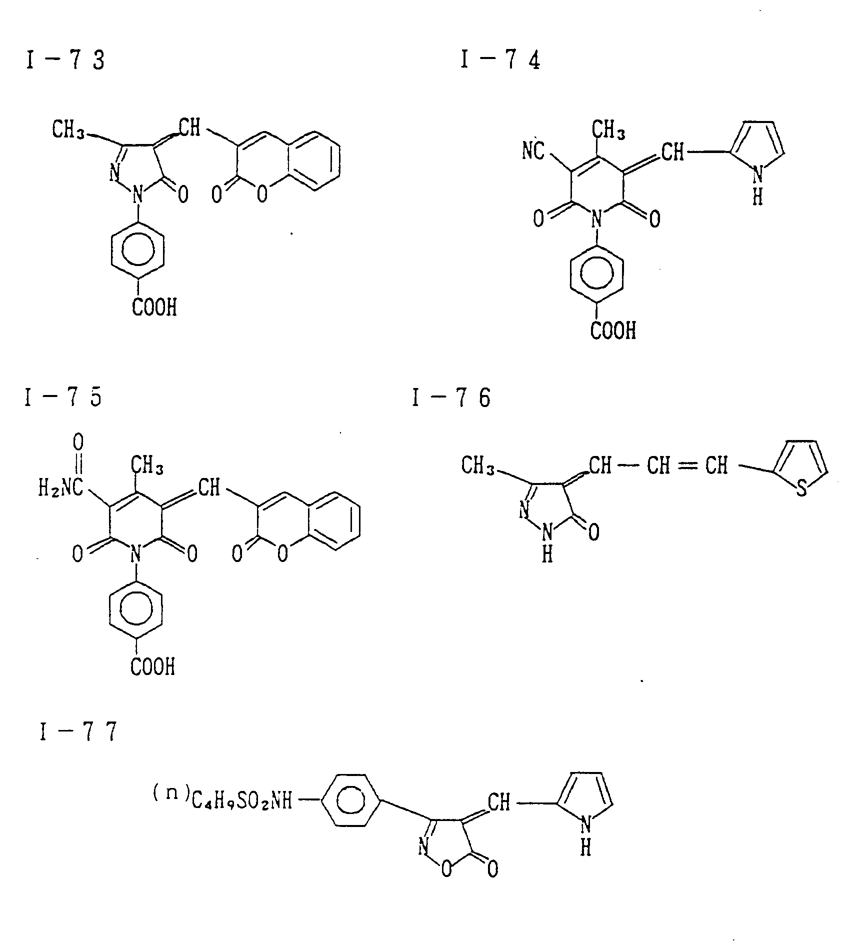

The dyes of general formula (II) can be synthesized by known methods in the art (e.g., by the condensation reaction of the corresponding acid nucleus with a methine source such as ethyl orthoformate, diphenylamidine, 1,1,3,3-tetramethoxypropane, malonaldehydodianil or glutaconic aldehydodianil, or a formyl compound).

The reaction temperature is 0 to 200°C, preferably 20 to 120°C. The reaction time is 5 minutes to 48 hours, preferably 10 minutes to 5 hours.

Examples of the aprotic (non-protonic) polar solvent which can be preferably used in the present invention include amides having not more than 6 carbon atoms (e.g., N,N-dimethylformamide (hereinafter abbreviated to DMF), N,N-dimethylacetamide (hereinafter abbreviated to DMAc), N-methylpyrrolidone), sulfoxides having not more than 6 carbon atoms (e.g., N,N-dimethylsulfoxide (hereinafter abbreviated to DMSO), N,N-diethylsulfoxide), sulfones having not more than 6 carbon atoms (e.g., sulfolane), imidazoles having not more than 6 carbon atoms (e.g., 1,2-dimethylimidazole, 1-ethyl-2-methylimidazole), phosphoric acid amides having not more than 6 carbon atoms or phosphorus acid amides having not more than 6 carbon atoms (e.g., hexamethylphosphoric triamide (hereinafter abbreviated to HMPA), hexamethylphosphorus acid triamide), and ureas having not more than 6 carbon atoms (e.g., tetramethylurea). Of these compounds, amides having not more than 6 carbon atoms and sulfoxides having not more than 6 carbon atoms are particularly preferred. These solvents may be used either alone or in combination with other solvents as a mixed solvent. Other solvents to be used as the mixed solvent may be the above-described aprotic polar solvents, or any of organic solvents such as methanol (hereinafter abbreviated to MeOH), acetone, acetonitrile and ethyl acetate. These organic solvents (which may be the above-described aprotic solvents or other organic solvents) may be used in the reaction for the synthesis of the dyes. However, the dyes formed may be dissolved in the above-described aprotic polar solvents, and a poor solvent for the dyes used in the present invention is added thereto to crystallize out the dyes. In the present invention, the stage immediately before dispersion is required to be the crystallization stage using the aprotic polar solvent.

Conventionally, after the formation of the dyes, the crystals are collected by filtration and dried in the drying stage to remove the solvents, and the dispersion of the dyes is then carried out. In the prevent invention, drying is not carried out after the formation of dyes, and the dyes as formed are subjected to the dispersion stage. After the formation of the dyes, the solvents may be removed by filtration, or the dyes as such may be dispersed without carrying out filtration. Examples of the drying stage include drying with heating (under atmospheric or reduced pressure), blast drying (at room temperature or with hot air) and freeze-drying. In the present invention, working stages may be carried out in any order, so long as the drying stage is omitted.

The dispersions of the fine solid particles of the dyes of general formula (I) according to the present invention can be formed in the presence of a dispersant by conventional pulverizing methods (using a ball mill, a vibrating ball mill, a planetary ball mill, a sand mill, a colloid mill, a jet mill or a roller mill). In the pulverization, solvents (e.g., water, alcohols) may be used.

The crystallite particles of the dyes in the dispersions used in the present invention have an average particle size of not larger than 10 µm, preferably not larger than 1 µm, more preferably not larger than 0.5 µm. It is often preferred that the average particle size is not larger than 0.1 µm.

The present invention is now illustrated in greater detail by reference to the following examples which, however, are not to be construed as limiting the present invention in any way.

### EXAMPLE 1

### (1) Synthesis of Dye I-41

### (i) Synthesis in the presence of DMSO Solvent

A mixture of 1-(4-carboxyphenyl)-3-methyl-2-pyrazoline-3-one (21.8 g), 4-N,N-dimethylaminobenzaldehyde (14.9 g) and DMSO (200 ml) was heated at 80°C for one hour. The reaction mixture (solution) was poured into a mixture of 700 g of ice and 300 g of water while stirring at 300 rpm, and stirring was continued for 5 minutes. Solids were collected by filtration by means of suction, and washed with water to obtain 79.0 g of water-wetted dye I-41 (hereinafter referred to as I-41-A) (the content of Dye I-41: 33%).

### (ii) synthesis in the presence of DMF Solvent

The synthesis of (i) described above was repeated except that DMF was used as the solvent in place of DMSO to obtain 72.2 g of water-wetted dye I-41 (hereinafter referred to as I-41-B) (the content of dye I-41: 37%).

### (iii) Synthesis in the presence of MeOH Solvent (comparison)

The synthesis of (i) described above was repeated except that MeOH was used as the solvent in place of DMSO to obtain 64.3 g of water-wetted dye I-41 (hereinafter referred to as I-41-C) (the content of dye I-41: 42%).

### (2) Drying (comparison)

### (i) Blast Drying

Twenty grams of I-41-A was dried with air blast at room temperature for one week. After drying, I-41 weighed 6.7 g (referred to as I-41-D).

### (ii) Drying with heating

Twenty grams of I-41-A was dried with heating at 60 to 70°C under atmospheric pressure for 3 days. After drying, I-41 weighed 6.6 g (referred to as I-41-E).

### (3) Dispersion

Each of the dyes I-41-A to I-41-E obtained above was dispersed in the following manner. The amount of water in the water-wetted products (A, B and C) was controlled so as to give the ratio described.

3.75 g of I-41 was premixed with 37.5 ml of a 1% aqueous solution of carboxymethyl cellulose as the dispersant, and 53.7 ml of water was added thereto. Dispersion was carried out in the presence of zirconia beads for 3 hours by using the horizontal dispersing device Eiger Motor Mill M-50. Zirconia beads were removed by filtration, and the resulting dispersion was diluted with water to reduce the concentration of the dye to 2%.

### (4) Evaluation of Particle Size after Dispersion

The particle size of the dye dispersed above was measured. The measurement was made by Mastersizer (manufactured by Malvern Instruments Ltd.).

### (5) Evaluation of Photographic Performance

### (i) Preparation of Sample

Silver halide photographic materials were prepared in the same manner as described in JP-A-3-249752 (the 7th line of left upper column of page 24 to the 20th line of left lower column of page 25) except that each of the dispersions I-41-A to I-41-E of the dye I-41 used in the present invention (the amount of the dye I-41 added was 120 mg/m²) was used in place of the dye described in JP-A-3-249752 (the 18th line of left upper column of page 24).

### (ii) Evaluation of storage Stability

The resulting samples were stored at 40°C and 80% RH for 3 days, and then processed as described in JP-A-3-249752 (processing described in Table at the 8th line of right lower column of page 25 to left upper column of page 26). The samples before storage were processed in the same manner as described above. A difference in sensitivity between the sample after storage and that before storage was determined as a degree of desensitization.

### (6) Results

The results of evaluation of the particle size after dispersion and the results of evaluation of storage stability are shown in Table 1 below.

**TABLE 1**

| Sample No. | Dye | Average Particle Size (µm) | Maximum Particle Size (µm) | Degree of Desensitization |
|---|---|---|---|---|
| 1 | omitted | - | - | 0.03 |
| 2 (Invention) | I-41-A | 0.40 | 0.90 | 0.04 |
| 3 (Invention) | I-41-B | 0.41 | 0.92 | 0.03 |
| 4 (Comparison) | I-41-C | 0.50 | 1.35 | 0.17 |
| 5 (Comparison) | I-41-D | 0.46 | 1.15 | 0.14 |
| 6 (Comparison) | I-41-E | 0.48 | 1.31 | 0.15 |

It can be seen from the results shown in Table 1 that the dye dispersions I-41-A and I-41-B (in Sample Nos. 2 and 3) in accordance with the present invention have an average particle size and the maximum particle which both are smaller than those of the dispersions I-41-C, I-41-D and I-41-E (in Sample Nos. 4, 5 and 6) of the dye prepared in the presence of MeOH solvent and the dried dyes, and further the samples in accordance with the present invention are low in a degree of desensitization in comparison with comparative samples. Accordingly, it can be seen that the process of the present invention wherein the dye is synthesized in the presence of DMSO or DMF solvent and dispersed without passing through any drying stage is effective in obtaining the dye having good dispersibility and good storage stability.

## Claims

1. A process for preparing a dispersion of fine solid particles of a dye represented by the following general formula (I), wherein the dye is synthesized in the presence of at least one aprotic polar solvent as a solvent to be used in the synthesis of the dye,
D-(X)_{y} (I)
wherein D represents a residue of a compound having a chromophoric group; X represents a dissociable proton or a group having a dissociable proton bonded to D directly or through a bivalent bonding group; and y represents an integer of 1 to 7;
characterized in that the resulting dye is dispersed without passing through any drying stage;
with the proviso, that said dye is not an oxonol dye.

2. The process of claim 1, wherein the dye the general formula (I) is a dye represented by the following formula (II) 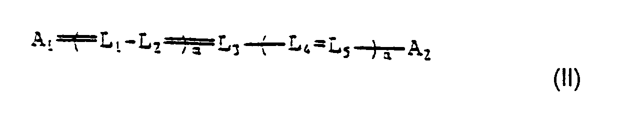 wherein A₁ represents an acid nucleus required for forming a dye; A₂ represents an acid nucleus required for forming a dye, or an aromatic ring or a heterocyclic ring; L₁, L₂, L₃, L₄ and L₅ each represents a methine group; and m and n each represents 0 or 1; with the proviso that A₂ is not an acid nucleus required for forming an oxonol dye.

3. The process of claim 1 or 2 wherein the aprotic polar solvent is selected among amides having not more than 6 carbon atoms.

4. The process of claim 1 or 2 wherein the aprotic solvent is selected among sulfoxides having not more than 6 carbon atoms.

5. Use of the dispersion produced according to the process of claim 1 in a silver halide photographic material.

6. Use of claim 5 wherein the dye of general formula (I) is a dye represented by the following general formula (II) 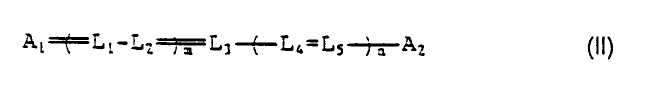 wherein A₁ represents an acid nucleus required for forming a dye; A₂ represents an acid nucleus required for forming a dye, or an aromatic ring or a heterocyclic ring; L₁, L₂, L₃, L₄ and L₅ each represents a methine group; and m and n each represents 0 or 1;
with the proviso that A₂ is not an acid nucleus required for forming an oxonol dye.

7. Use of claim 5 or 6 wherein at least one member of amides is used as the aprotic polar solvent.

8. Use of claim 5 or 6 wherein at least one member of sulfoxides is used as the aprotic polar solvent.

## Patentansprüche

1. Verfahren zur Herstellung einer Dispersion von feinen festen Partikeln eines Farbstoffes, dargestellt durch die folgende allgemeine Formel (I), worin der Farbstoff in der Gegenwart mindestens eines aprotischen polaren Lösungsmittels als Lösungsmittel zur Verwendung in der Synthese des Farbstoffes synthetisiert wird
D-(X)_{y} (I)
worin D eine Gruppe einer Verbindung mit einer chromophoren Gruppe darstellt; X ein dissoziierbares Proton oder eine Gruppe mit einem dissoziierbaren Proton darstellt, gebunden direkt an D oder durch eine bivalente Verbindungsgruppe; und y eine ganze Zahl von 1 bis 7 darstellt; dadurch gekennzeichnet, daß der resultierende Farbstoff ohne Durchlaufen irgendeiner Trocknungsstufe dispergiert wird; mit der Maßgabe, daß besagter Farbstoff kein Oxonolfarbstoff ist.

2. Verfahren nach Anspruch 1, worin der Farbstoff der allgemeinen Formel (I) ein Farbstoff der folgenden allgemeinen Formel (II) ist 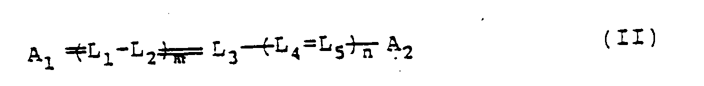 worin A₁ einen Säurekern darstellt, benötigt zur Formung eines Farbstoffes; A₂ einen Säurekern darstellt, benötigt zur Formung eines Farbstoffes, oder einen aromatischen Ring oder einen heterocyclischen Ring; L₁, L₂, L₃, L₄ und L₅ jeweils eine Methingruppe darstellen; und m und n jeweils 0 oder 1 darstellen; mit der Maßgabe, daß A₂ kein zur Formung eines Oxonolfarbstoffes nötiger Säurekern ist.

3. Verfahren nach Anspruch 1 oder 2, worin das aprotische polare Lösungsmittel ausgewählt ist unter Amiden mit nicht mehr als 6 Kohlenstoffatomen.

4. Verfahren nach Anspruch 1 oder 2, worin das aprotische Lösungsmittel ausgewählt ist unter Sulfoxiden mit nicht mehr als 6 Kohlenstoffatomen.

5. Verwendung der Dispersion, hergestellt in Übereinstimmung mit dem Verfahren nach Anspruch 1, in einem photographischen Silberhalogenidmaterial.

6. Verwendung nach Anspruch 5, worin der Farbstoff der allgemeinen Formel (I) ein Farbstoff dargestellt durch die folgende allgemeine Formel (II) ist 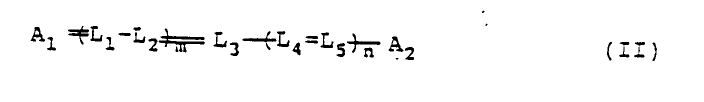 worin A₁ einen Säurekern darstellt, benötigt zur Formung eines Farbstoffes; A₂ einen Säurekern darstellt, benötigt zur Formung eines Farbstoffes, oder einen aromatischen Ring oder einen heterocyclischen Ring; L₁, L₂, L₃, L₄ und L₅ jeweils eine Methingruppe darstellen; und m und n jeweils 0 oder 1 darstellen; mit der Maßgabe, daß A₂ kein zur Formung eines Oxonolfarbstoffes nötiger Säurekern ist.

7. Verwendung nach Anspruch 5 oder 6, worin mindestens ein Amid als aprotisches polares Lösungsmittel verwendet wird.

8. Verwendung nach Anspruch 5 oder 6, worin mindestens ein Sulfoxid als aprotisches polares Lösungsmittel verwendet wird.

## Revendications

1. Procédé de préparation d'une dispersion de particules solides d'un colorant représenté par la formule générale suivante (I), caractérisé en ce que le colorant est synthétisé en présence d'au moins un solvant polaire aprotique comme solvant à utiliser dans la synthèse du colorant,
D-(X)_{y} (I)
dans laquelle D représente un résidu d'un composé ayant un groupe chromophore ; X représente un proton dissociable ou un groupe ayant un proton dissociable lié à D directement ou par l'intermédiaire d'un groupe de liaison bivalent; et y représente un entier de 1 à 7; caractérisé en ce que le colorant résultant est dispersé sans passer par une quelconque étape de séchage; avec la condition que ledit colorant ne soit pas un colorant oxonol.

2. Procédé selon la revendication 1, caractérisé en ce que le colorant de formule générale (I) est un colorant représenté par la formule suivante (II) 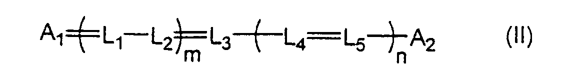 dans laquelle A₁ représente un noyau acide nécessaire pour former un colorant ; A₂ représente un noyau acide nécessaire pour former un colorant, ou un cycle aromatique ou un cycle hétérocyclique; L₁, L₂, L₃, L₄ et L₅ représentent chacun un groupe méthine ; et m et n représentent chacun 0 ou 1 ; avec la condition que A₂ ne soit pas un noyau acide nécessaire pour former un colorant oxonol.

3. Procédé selon la revendication 1 ou 2, caractérisé en ce que le solvant polaire aprotique est choisi parmi des amides n'ayant pas plus de 6 atomes de carbone.

4. Procédé selon la revendication 1 ou 2, caractérisé en ce que le solvant aprotique est sélectionné parmi des sulfoxydes n'ayant pas plus de 6 atomes de carbone.

5. Utilisation d'une dispersion préparée selon le procédé de la revendication 1 dans un matériau photographique à l'halogénure d'argent.

6. Utilisation selon la revendication 5, caractérisée en ce que le colorant de formule générale (I) est un colorant représenté par la formule générale (II) 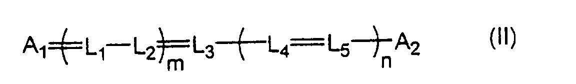 dans laquelle A₁ représente un noyau acide nécessaire pour former un colorant; A₂ représente un noyau acide nécessaire pour former un colorant, ou un cycle aromatique ou un cycle hétérocyclique ; L₁, L₂, L₃, L₄ et L₅ représentent chacun un groupe méthine; et m et n représentent chacun 0 ou 1 ; avec la condition que A₂ ne soit pas un noyau acide nécessaire pour former un colorant oxonol.

7. Utilisation selon la revendication 5 ou 6, caractérisée en ce qu'au moins un membre des amides est utilisé comme solvant polaire aprotique.

8. Utilisation selon la revendication 5 ou 6, caractérisée en ce qu'au moins un membre des sulfoxydes est utilisé comme solvant polaire aprotique.
